# EUROPÄISCHE PATENTSCHRIFT

(11) **EP 2 188 928 B1**
(45) Veröffentlichungstag und Bekanntmachung des Hinweises auf die Patenterteilung: **08.02.2012**
(21) Anmeldenummer: 08785616.7
(22) Anmeldetag: 19.08.2008
(51) Int. Cl.: H04B 17/00

(54) **VERFAHREN UND VORRICHTUNG ZUR MESSUNG DES ANTENNENDIVERSITY-GEWINNS IN DIGITALEN FUNKÜBERTRAGUNGSSYSTEMEN**
METHOD AND DEVICE FOR MEASURING THE ANTENNA DIVERSITY GAIN IN DIGITAL RADIO TRANSMISSION SYSTEMS
PROCÉDÉ ET DISPOSITIF DE MESURE DU GAIN DE DIVERSITÉ D'ANTENNES DANS DES SYSTÈMES DE TRANSMISSION RADIO NUMÉRIQUES

(30) Priorität: 23.08.2007 DE 102007039786
(43) Veröffentlichungstag der Anmeldung: 26.05.2010
(73) Patentinhaber: Deutsche Telekom AG, 53105 Bonn (DE)
(72) Erfinder: KRUSE, Gerhard, 53578 Windhagen (DE); CRISAN, Christine, 53229 Bonn (DE)
(74) Vertreter: Riebling, Peter
(86) Internationale Anmeldenummer: PCT/EP2008/006801
(87) Internationale Veröffentlichungsnummer: WO 2009/024320

(56) Entgegenhaltungen:
- EP-A- 1 523 143
- DE-A1- 19 727 516
- DE-A1-102005 002 801
- US-A- 5 812 539
- US-A1- 2004 104 844

## Beschreibung

Die Erfindung betrifft ein Verfahren und eine Vorrichtung zur Messung des Antennendiversity-Gewinns in digitalen Funkübertragungssystemen nach dem Oberbegriff des Patenanspruches 1.

Allgemein wird als Diversity-Gewinn die Erhöhung der EmpfängerEmpfindlichkeit gegenüber dem Empfang ohne Diversity in einem vorgegebenem Ausbreitungsszenario definiert.

Eine Verbesserung der Empfindlichkeit eines Empfangssystems durch Verwendung mehrerer Antennen (im allgemeinen zwei) ist bei Funksystemen in der Analog- und Digitaltechnik bereits bekannt.
Bei herkömmlichen Mobilfunkanwendungen werden Antennendiversity-Anordnungen bevorzugt eingesetzt, um Fadingeffekte (Schwankungen der Empfangsfeldstärke bei Funkübertragungen) zu reduzieren.
Jedoch ist eine exakt definierte und genau quantifizierbare Bestimmung des Diversity-Gewinns (DG) bisher nicht zufrieden stellend gelöst, um daraus weitere Systemparameter, wie zum Beispiel die erforderliche Sendeleistung einer Station für die Planung abzuleiten und zu optimieren.

Nach dem Stand der Technik wird der Diversity-Gewinn (DG) statisch (für eine fest definierte Verbindungsstrecke) mit einer definierten Antennenkonfiguration angegeben.
Diese Angabe ist für viele Anwendungen, wie zum Beispiel im Mobilfunk nicht ausreichend.
Daher ist eine genaue Definition des Diversity-Gewinns (DG) erforderlich. Einen Vorschlag zur Bestimmung bzw. zur Messung des Diversity-Gewinns (DG) bei tragbaren Anschlussgeräten (Teminals) ist in der Veröffentlichung von Tsunekawa (Spatial, Polarisation, and Pattern Diversity for Wireless Handheld Terminals) offenbart.

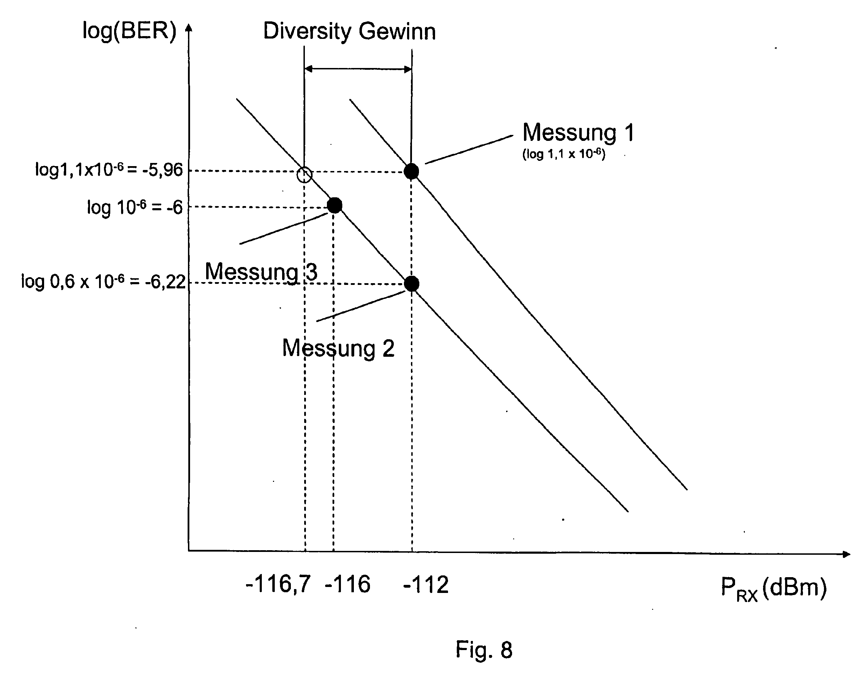

Hier wird der Diversity-Gewinn (DG) über die S/N-Verbesserung und dem Korrelationsfaktor der von zwei Antennen gelieferten Signale bestimmt.
Die Messung beider Werte ist äußerst problematisch, langwierig und ungenau (Vergleich Messung zur Theorie siehe Tsukenawa Figure 8-4 (d)).

DE 197 27 516 A1 offenbart ein Verfahren zur Bestimmung des internen Rauschens digitaler Schaltkreise, wobei die Beziehung log (BER) = f(Pe) mit C/I als Parameter verwendet wird, die ebenfalls im Rahmen des nachfolgend beschriebenen Verfahrens verwendet wird. Hierbei werden auch parallele Geraden durch Interpolation benachbarter Geraden berechnet.

US 5 812 539 A und US 2004/104844 A1 offenbaren (Diversity-) Empfangssysteme und die Anwendung von inter-/extrapolierte Werten, wobei die Eingangsleistung am Empfangssystem reduziert wird, um dadurch einen Diversity-Gewinn herzustellen.

Die Aufgabenstellung der vorliegenden Erfindung wird somit darin gesehen, ein Verfahren bereit zu stellen, welches für ein bestimmtes Funkübertragungssystem (z.B. UMTS, B3G, WLAN) einen definierten Diversity-Gewinn (DG)-Wert schnell und mit hoher Genauigkeit für die Entwicklung und Planung liefert.

Die Lösung der Aufgabe ist durch die Merkmale des Patentanspruches 1 gekennzeichnet.

Wichtiges Merkmal ist, dass das Verfahren und die Vorrichtung zur Messung des Diversity-Gewinns (DG) in digitalen Funkübertragungssystemen eine Optimierung von Funknetzplanungen mittels eines gezielten Einsatzes von Diversity ausbildet, wodurch eine Verminderung der Anzahl verwendeter Basisstationen und eine Steigerung der Sende- und Empfangsqualität ausgebildet ist.

Es wird somit ein Verfahren und eine Vorrichtung offenbart, mit deren Hilfe der Diversity-Gewinn (DG) von Antennenanordnungen in digitalen, stationären und mobilen Funkübertragungssystemen genau und schnell gemessen wird.

Ein wesentlicher Vorteil des verwendeten Verfahrens ist, dass durch den Einsatz von Diversity und deren genauer Quantifizierung die Funknetzplanung optimiert wird.

Ein weiterer Vorteil ist, dass die Übertragungsqualität verbessert und/oder die Anzahl von Basisstationen in Mobilfunksystemen reduziert werden.

Die Messung eines Diversity-Gewinn (DG)-Wertes mit hoher Genauigkeit nach dem erfindungsgemäßen Verfahren ist besonders wichtig, um in zukünftigen Mobilfunksystemen (Beyond 3 G) z.B. nach MIMO (Multiple Input Multiple Output)-Verfahren, bei denen die Übertragungswege möglichst unkorreliert sein sollen, deren Übertragungskapazität zu optimieren.

Für den bestimmungsgemäßen Ablauf der Messungen wird eine Messvorrichtung beschrieben.

Die Messungen gemäß der Erfindung können im Betrieb an aufgebauten Basisstationen oder im Labor, zum Beispiel mit der Nachbildung verschiedener Ausbreitungswege durch einen Funkkanalsimulator, durchgeführt werden.

Aus der Messung der Bitfehlerrate (BER) und der Empfängereingangsleistung (P_{Rx}) eines digitalen Kommunikationsübertragungssystems wird der Diversity-Gewinn (DG) in einem vorgegebenem Wellenausbreitungsszenario ermittelt.

Da die Bitfehlerrate (BER) und die Empfängereingangsleistung (P_{Rx}) sehr genau gemessen werden können, kann auch der Diversity-Gewinn (DG) nach dem erfindungsgemäßen Verfahren mit einer hohen Genauigkeit bestimmt werden.

Im Folgenden wird die Erfindung anhand von darstellenden Zeichnungen näher erläutert. Hierbei gehen aus den Zeichnungen und ihrer Beschreibung weitere erfindungswesentliche Merkmale und Vorteile der Erfindung hervor.

Darin zeigt:
- Figur 1:: Flussdiagramm des Verfahrens
- Figur 2:: Darstellung Messung 1 (ohne Diversity)
- Figur 3:: Darstellung Messung 2 (mit Diversity)
- Figur 4:: graphische Darstellung der linearen Interpolation oder Extrapolation der Messwerte
- Figur 5:: graphische Darstellung einer Diversity-Gewinn-Messung, z.B. an einer UMTS-Basisstation
- Figur 6:: graphische Darstellung einer Funkstrecke mit einem Funkkanalsimulator ohne Diversity (n Übertragungswege)
- Figur 7:: graphische Darstellung nach Figur 6 mit Diversity (2n Übertragungswege)
- Figur 8:: graphische Darstellung der linearen Interpolation oder Extrapolation der Messwerte (Ausführungsbeispiel)

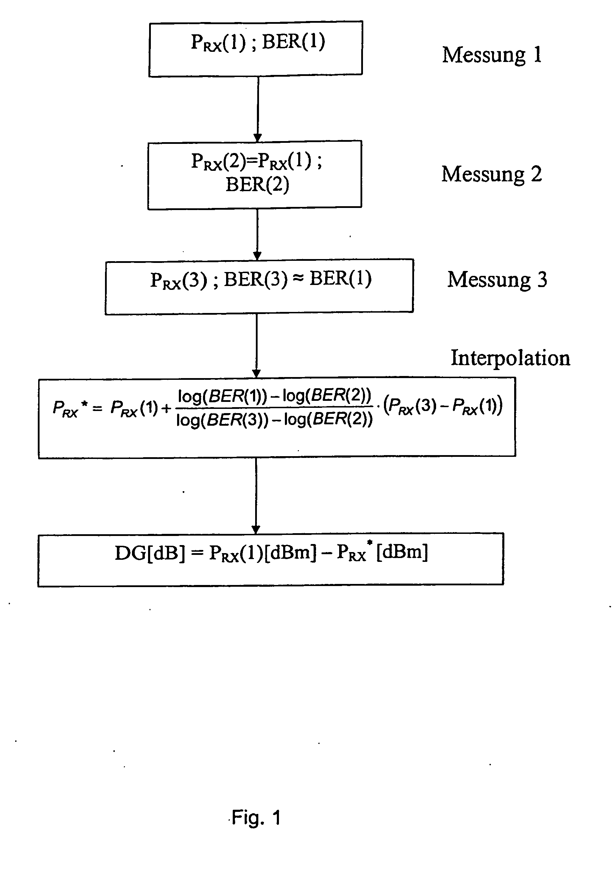

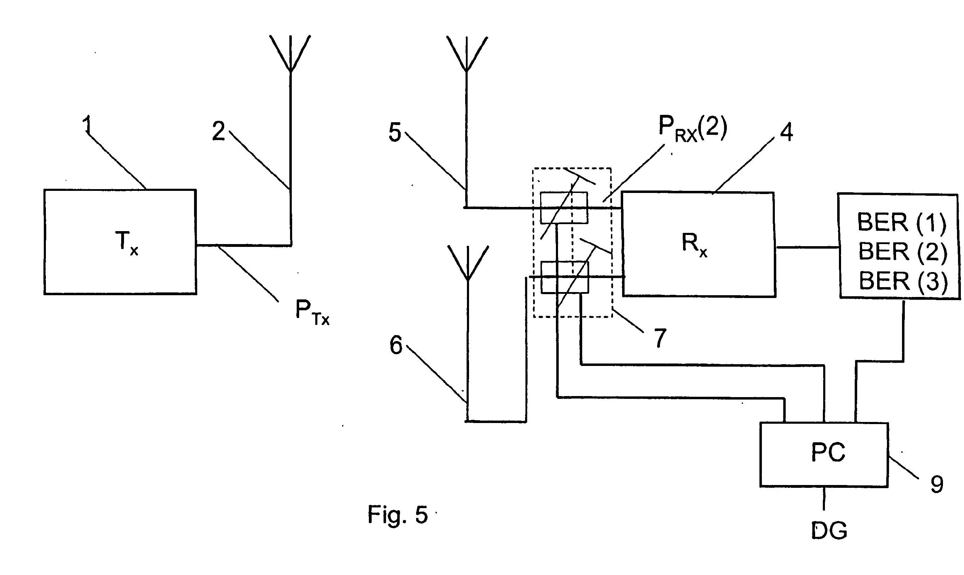

Das in den Figuren 1 bis 8 dargestellte Verfahren zur Messung eines Diversity-Gewinns (DG) eines Funk-Übertragungssystems ist beispielhaft für weitere Ausführungsvarianten für einen Messaufbau mit einer Sende- und zwei Empfangsantennen dargestellt.

Analoge Verhältnisse ergeben sich mit zwei Sende- und einer Empfangsantenne (2, 4) (Sende-Diversity).

Das Messverfahren ist auch für mehr als zwei Sende- und/oder Empfangsantennen geeignet, wie zum Beispiel für MIMO-Systeme.

Der Diversity-Gewinn ist von folgenden Faktoren abhängig:
- Typ und Konfiguration der Antennen
- Frequenz
- Ausbreitungsszenario
- Diversity-Algorithmus des Empfängers.

Da im Mobilfunk unterschiedliche Ausbreitungsszenarien und damit verschiedene Diversity-Gewinne auftreten können, werden Grenzwerte (minimaler und maximaler Diversity-Gewinn) oder Mittelungen des Diversity-Gewinns vorgeschlagen.

Ein Funkübertragungssystem kann mit einem "best case", "worst case" oder einem gewichteten Mittelwert des Diversity-Gewinns geplant werden.

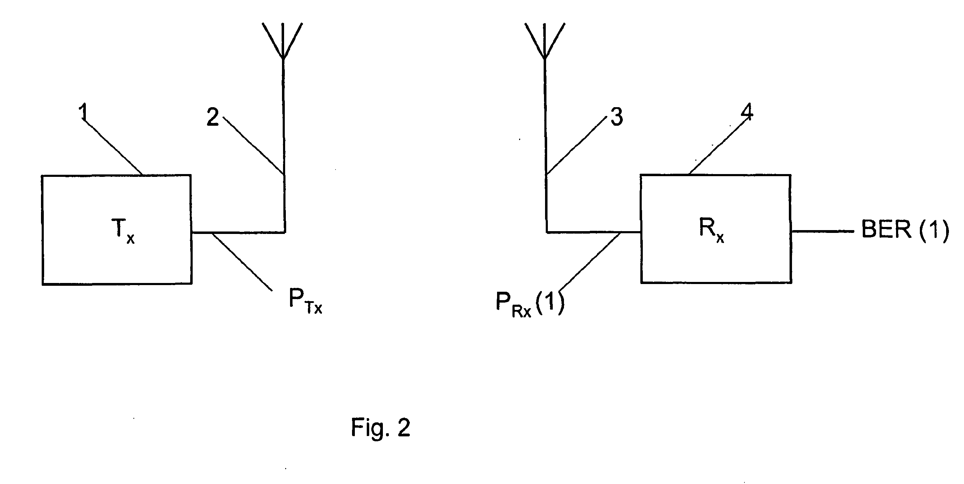

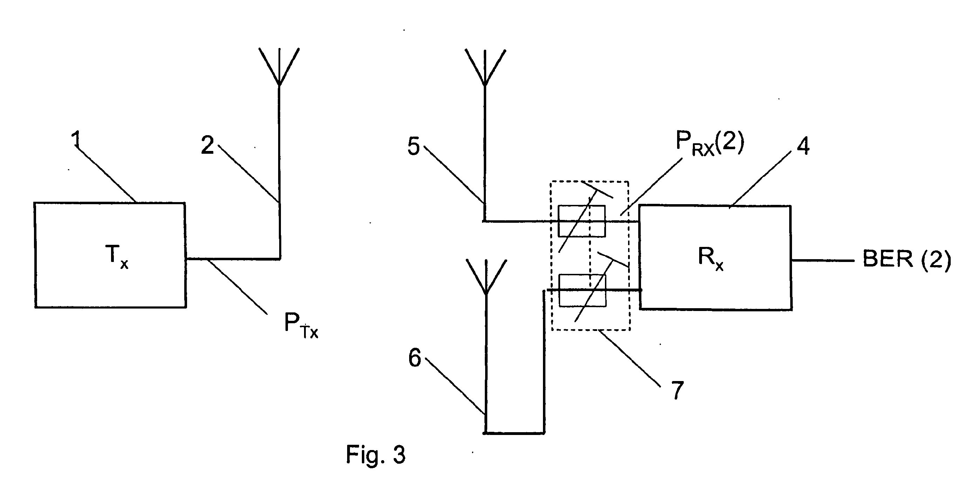

Das Verfahren zur Messung des Diversity-Gewinns (DG) wird unter folgenden Bedingungen während einer Messung durchgeführt:
- konstante Leistung P_{Tx}, eines Senders (1) an einer Antenne (3) (Fig.2 und Fig.3)
- quasi-stationäre Ausbreitungsbedingungen
   (invariante Ausbreitungswege und gleiches Fading)
- konstante Geschwindigkeit einer Station in Mobilfunksystemen.

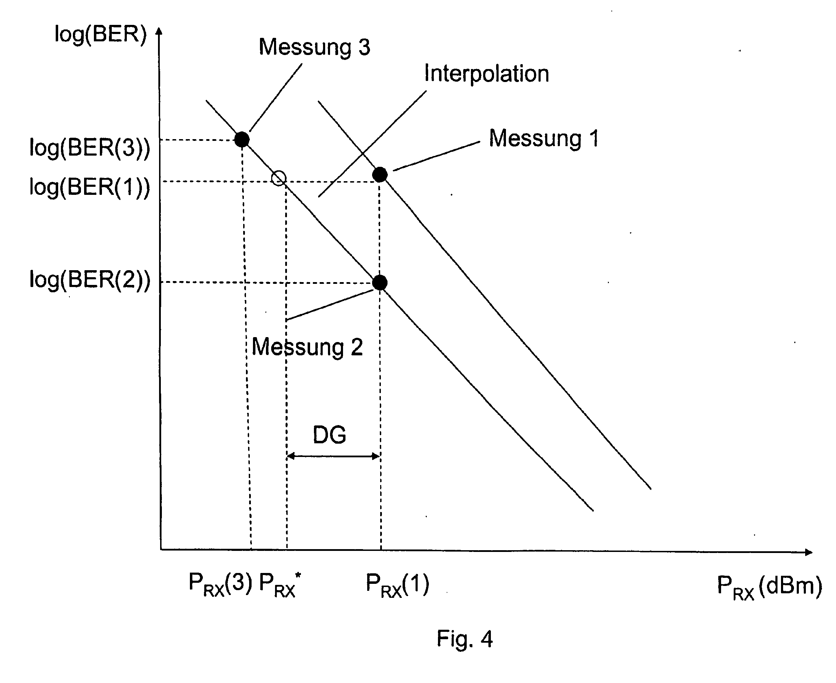

Die Figuren 1 bis 8 zeigen das Messverfahren, welches in den nachfolgenden Schritten näher beschrieben ist.
1. Messung der Leistung der Einhüllenden (envelope power) der Eingangsleistung P_{Rx}(1) des Empfängers 4 mit einer Empfangsantenne 3 und der korrespondierenden Bitfehlerrate (BER[1]).
2. Einstellung der Eingangsleistung P_{Rx}(1) an den Diversityeingängen des Empfängers 4 mit den Empfangsantennen 5 und 6.
   Ein Dämpfungseinsteller 7 steht in beiden Zweigen auf 0 dB.
   Da durch den Empfang der möglichst unkorrelierten Signale der beiden
   Antennen 5, 6 eine Verbesserung der Übertragung stattfinden soll, wird eine Bitfehlerrate BER(1) > BER(2) erwartet.
3. Reduzierung der Eingangsleistung in beiden Diversityzweigen gleichmäßig mit dem Dämpfungseinsteller 7, um den ungefähr zu erwarteten Diversity-Gewinn auf die Eingangsleistung P_{Rx}(3) so, dass die Bitfehlerrate BER[3] - BER[1] ist (siehe Fig. 4).
   Dies entspricht einer Reduzierung der Sendeleistung P_{TX}, um die mit dem Dämpfungseinsteller 7 eingestellte Dämpfung.
4. Lineare Interpolation oder Extrapolation der Messwerte der Eingangsleistungen P_{Rx}(2) und P_{Rx}(3), um die Eingangsleistung(P_{Rx}* für die Bitfehlerrate BER(1) zu berechnen (Fig.4).

Aus der Veröffentlichung von Kamilo Feher "MODEMS for Emerging Digital Cellular-Mobile Radio System", IEEE Transactions on Vehicular Technology, May 1991 oder aus DE 197 27 516 B4, ist bekannt ist, dass der Logarithmus der Bitfehlerrate in dem hier interessierenden Bereich reziprok linear proportional zur Eingangsleistung ist.

### Ergebnisse:

Bitfehlerrate BER(1) bei Eingangsleistung P_{Rx}(1) ohne Diversity und Eingangsleistung P_{Rx}* mit Diversity.
5. Bestimmung des Diversity-Gewinns (DG):
   DG/db = P_{Rx}(1)/dBm - P_{Rx}*/dBm

Die Messungen nach Punkt 2 bis 5 sind unabhängig vom Algorithmus, mit dem die Diversity-Signale im Empfänger 4 verarbeitet werden. Daher lässt sich mit diesem Messverfahren auch die Effektivität unterschiedlicher Diversity-Verfahren und MIMO-Systeme vergleichen.

Vorzugsweise werden die Ausbreitungsbedingungen mit dem Ziel der besseren Reproduzierbarkeit der Messungen mit einem Funkkanalsimulator 8 definiert.

Ein für Mobilfunksysteme zweckmäßige Ausgestaltung der Erfindung ist eine Diversity-Gewinn (DG)-Bestimmung der Basisstationsantennenanlagen für Verbindungen, die entsprechend den Ausbreitungsbedingungen in der Funkzelle einen hohen und einen niedrigen Diversity-Gewinn (DG)-Wert liefern (Diversity-Gewinn-Grenzwerte einer Antennenanlage in einer Funkzelle).

Vorzugsweise werden die Messabläufe nach Figur 1 automatisch durchgeführt.

Ein Rechner 9 steuert und erfasst die Messungen 1 bis 3 gemäß Fig. 1, führt anschließend die Interpolation durch und berechnet den Diversity-Gewinn (DG).

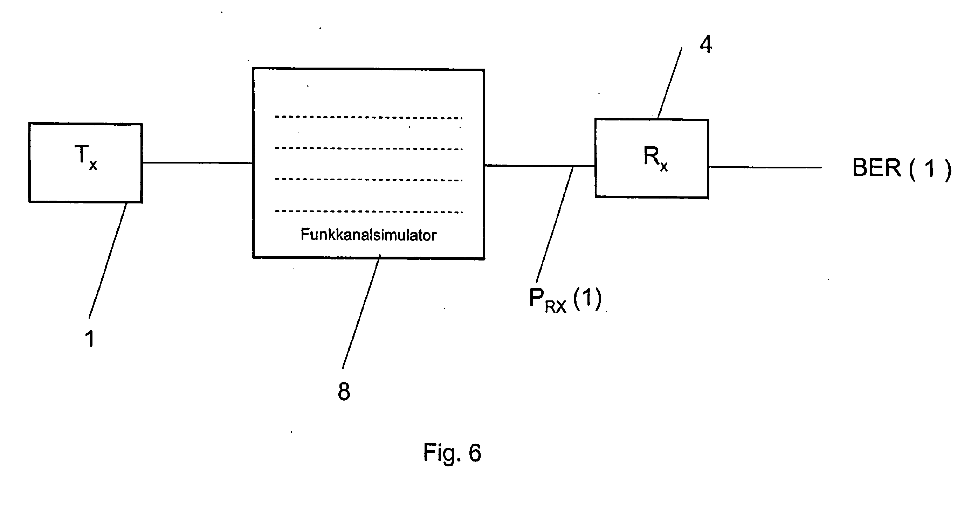

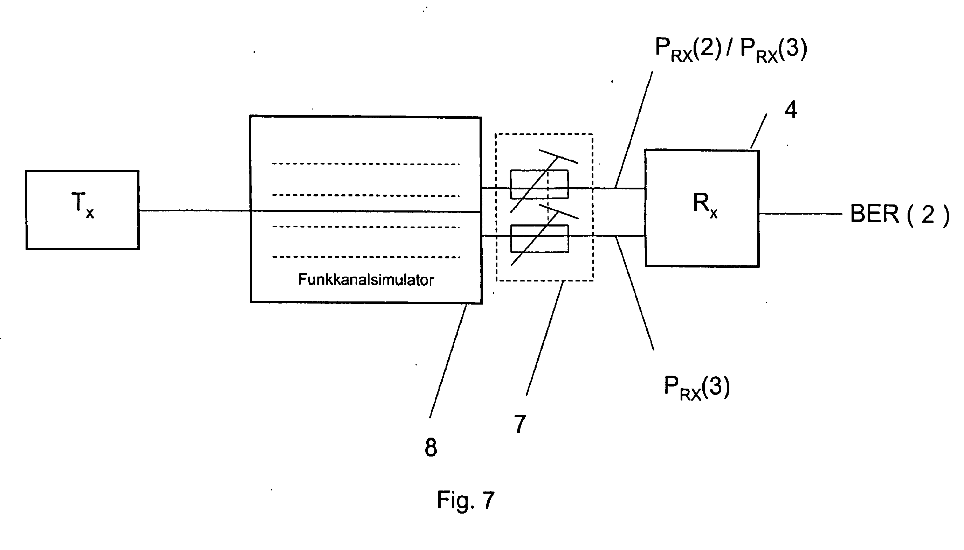

Als Beispiel sei die Diversity-Gewinn-Messung an einer UMTS-Basisstation mit zwei Diversity-Antenneneingängen erläutert. Die Funkstrecke wird mit einem Funkkanalsimulator 8 mit n Übertragungswegen ohne Diversity und 2n Übertragungswegen mit Diversity gebildet (Fig. 6 und 7).

### Messung 1 (Fig.6):

Simulierung von n (z.B. n=4 nach 3G TS 25.104) Übertragungswegen zwischen dem Ausgang des Senders 1 und dem Ausgang des Funkkanalsimulators 8.
Messung der Eingangsleistung P_{Rx}(1) und der Bitfehlerrate BER(1) (z.B. P_{Rx}(1) = -112 dBm und BER(1) = 1,1·10⁻⁶).

### Messung 2 (Fig. 7):

Gleiche Einstellung des Funkkanalsimulators 8, wie bei Messung 1.
Zusätzlicher Empfang über den zweiten Diversity-Kanal mit den gleichen Einstellungen wie Kanal 1.
Messung der Eingangsleistung P_{Rx}(2) und der Bitfehlerrate BER(2) (z.B. P_{Rx}(2) = -112 dBm und BER(2) = 0,6·10⁻⁶).

### Messung 3 (Fig. 7):

Reduzierung der Empfänger-Eingangsleistung P_{Rx} mit dem Dämpfungseinsteller 7 um 4 dB (erwarteter Diversity-Gewinn): P_{Rx}(3) = -116 dBm und BER(3) = 10⁻⁶).

### Extrapolation (Fig. 8):

Mit den beispielhaften Messergebnissen ergibt sich durch eine Extrapolation der beiden Messungen 2 und 3 die Bitfehlerrate BER(1) = 1,1·10⁻⁶ (Messung 1) bei P_{Rx}* = -116,7 dBm.

### Diversity-Gewinn (DG)-Bestimmung:

Daraus ergibt sich:
Diversity-Gewinn = -112 dBm - (-116,7 dBm) = 4,7 dB.

Die Dauer eines Messvorgangs (Messungen 1 bis 3) über zum Beispiel. 2·10⁶ Bit beträgt für UMTS mit 384 kBit/s Übertragungsrate ca. 5 s.

Bei Ausbreitungsbedingungen mit einem sehr langsamen Fading kann die Messdauer verlängert werden.
Bei automatischer Einstellung und Auswertung der drei Messwerte ist eine Diversity-Gewinn-Messung in <1 min durchführbar.
Dadurch sind relativ schnell Variationen für Optimierungsmaßnahmen am Planungskonzept und/oder der Antennenanlage durchführbar.

Durch den gezielten Einsatz von Diversity kann die Funknetzplanung optimiert, die Qualität verbessert und/oder Basisstationen eingespart werden.

Mit dem Verfahren und der Vorrichtung nach den Ansprüchen 1 bis 8 wird ein aussagefähiges, genaues und schnell durchzuführendes Verfahren zur Optimierung von Basisstationen bereit gestellt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

### Bezugszeichenliste

- 1.: Sender
- 2.: Sendeantenne
- 3.: Empfangsantenne
- 4.: Empfänger
- 5.: Empfangsantenne 1 (Diversity)
- 6.: Empfangsantenne 2 (Diversity)
- 7.: Dämpfungseinsteller
- 8.: Funkkanalsimulator
- 9.: Rechner

## Patentansprüche

1. Verfahren zur Messung des Antennendiversity-Gewinns digitaler Systeme durch Messung der Verbesserung der Empfangsystem-Empfindlichkeit über die Bitfehlerrate (BER), **dadurch gekennzeichnet, dass** das Verfahren folgende Schritte aufweist:
- Messung der Eingangsleistung P_{Rx}(1) des Empfangssystems (4) und der korrespondierenden Bitfehlerrate BER(1) für das jeweilige Ausbreitungsszenario mit einer Antenne (3);
- Messung der Bitfehlerrate BER(2) am Empfangssystem (4) bei gleicher System-Eingangsleistung P_{RX}(2) = P_{RX}(1) mit mehreren Antennen (5, 6);
- Reduzierung der Eingangsleistung am Empfangssystem (4) auf eine Eingangsleistung P_{RX}(3), bei der die zugehörige Bitfehlerrate BER(3) etwa gleich der Bitfehlerrate BER(1) gemäß Verfahrensschritt 1 ist;
- Bestimmen einer zu erwartenden Eingangsleistung P_{RX}* bei der Bitfehlerrate BER(3) aus den ermittelten Eingangsleistungen (P_{RX}(1), P_{RX}(2)) und den Bitfehlerraten BER(1), BER(2) und BER(3) mittels Inter-/Extrapolation
- Bestimmung des Diversity-Gewinns DG aus der Differenz zwischen den Eingangsleistungen P_{RX}(1) und P_{RX}*.

2. Verfahren nach Anspruch 1, **dadurch gekennzeichnet, dass** das Verfahren für Messungen im reziproken Sendeantennen-Diversity, Betrieb ausgebildet ist.

3. Verfahren nach einem der vorhergehenden Ansprüche 1 bis 2, **dadurch gekennzeichnet, dass** die zur Bestimmung des Diversity-Gewinn (DG)-Wertes notwendigen Messungen mittels im Betrieb befindliche Basisstationen oder im Labor durchführbar sind, wobei die im Labor gemessenen DG-Werte mit der Nachbildung verschiedener Ausbreitungswege mittels einem Funkkanalsimulator (8) gemessen sind.

4. Verfahren nach einem der vorhergehenden Ansprüche 1 bis 3, **dadurch gekennzeichnet, dass** der Diversity-Gewinn (DG)-Wert aus einer genau messbaren Bitfehlerrate und Empfängereingangsleistung bestimmbar ist.

5. Verfahren nach einem der vorhergehenden Ansprüche 1 bis 4, **dadurch gekennzeichnet, dass** das Messverfahren an einem Messaufbau mit mindestens einer Sende- und mindestens zwei Empfangsantennen (5, 6) ausgeführt ist.

6. Verfahren nach einem der vorhergehenden Ansprüche 1 bis 5, **dadurch gekennzeichnet, dass** der Diversity-Gewinn (DG) von nachfolgenden Faktoren bestimmt ist:
- Typ und Konfiguration der Antennen;
- Frequenz;
- Ausbreitungsszenario;
- Diversity-Algorithmus des Empfängers.

7. Verfahren nach einem der vorhergehenden Ansprüche 1 bis 6, **dadurch gekennzeichnet, dass** das Funkübertragungssystem mittels eines oberen oder unteren Grenzwerts oder mittels eines Mittelwerts des Diversity-Gewinns (DG) planbar ist.

8. Verfahren nach einem der vorhergehenden Ansprüche 1 bis 7, **dadurch gekennzeichnet, dass**
- das eine konstante Leistung eines Senders (1) an einer Antenne (2) anliegt;
- das quasi-stationäre Ausbreitungsbedingungen vorliegen;
- das eine konstante Geschwindigkeit einer Station in Mobilfunksystemen vorliegt.

9. Verfahren nach einem der vorhergehenden Ansprüche 1 bis 8, **dadurch gekennzeichnet, dass** die Messung folgende Verfahrensschritte aufweist:
- Messung der Eingangsleistung des Empfängers (4);
- Messung der korrespondierenden Bitfehlerrate mit mindestens einer Empfangsantenne (5, 6);
- Dämpfung des Signals mittels eines Dämpfungseinstellers (7)
- Reduzierung der Eingangsleistung auf eine Bitfehlerrate BER(3) ~ BER(1)
- Lineare Interpolation oder Extrapolation der Messwerte der EingangsLeistung von P_{Rx}(1) und P_{Rx}(2) und berechnen der zu erwartenden Eingangsleistung P_{RX}* zur Berechnung der Bitfehlerrate ;
- Bestimmung des Diversity-Gewinns (DG).

10. Verfahren nach einem der vorhergehenden Ansprüche 1 bis 9, **dadurch gekennzeichnet, dass** zur Reduzierung der Eingangsleistung am Empfangssystem (4) ein Dämpfungseinsteller (7) verwendet wird.

11. Verfahren nach einem der vorhergehenden Ansprüche 1 bis 10, **dadurch gekennzeichnet, dass** es auf einem Rechner (9) ausgeführt wird, welcher die Messungen automatisch durchführt, erfasst, interpoliert und die Berechnung des Diversity-Gewinns (DG) ausführt.

## Claims

1. Method for measuring the antenna diversity gain of digital systems by measuring the improvement in receiver system sensitivity by means of the bit error rate (BER), **characterised in that** the method has the following steps:
- measurement of the input power P_{RX}(1) of the receiver system (4) and the corresponding bit error rate BER(1) for the respective propagation scenario with one antenna (3);
- measurement of the bit error rate BER(2) at the receiver system (4) with the same system input power P_{RX}(2) = P_{RX}(1) with several antennas (5, 6);
- reduction of the input power at the receiver system (4) to an input power P_{RX}(3) at which the associated bit error rate BER(3) is approximately equal to the bit error rate BER(1) as in step 1;
- determination of an input power to be expected P_{RX}* at the bit error rate BER(3) from the measured input powers (P_{RX}(1), P_{RX}(2)) and the bit error rates BER(1), BER(2) and BER(3) by means of interpolation/ extrapolation;
- determination of the diversity gain DG from the difference between the input powers P_{RX}(1) and P_{RX}*.

2. Method according to claim 1, **characterised in that** the method is designed for measurements in reciprocal transmitter-antenna diversity operation.

3. Method according to one of the preceding claims 1 to 2, **characterised in that** the measurements necessary for determining the diversity gain (DG) value can be carried out by means of base stations which are in operation or in the laboratory, wherein the DG values measured in the laboratory are measured with the simulation of different paths of propagation by means of a radio channel simulator (8).

4. Method according to one of the preceding claims 1 to 3, **characterised in that** the diversity gain (DG) value can be determined from a precisely measurable bit error rate and receiver input power.

5. Method according to one of the preceding claims 1 to 4, **characterised in that** the measurement method is carried out on a measuring structure with at least one transmitter antenna and at least two receiver antennas (5, 6).

6. Method according to one of the preceding claims 1 to 5, **characterised in that** the diversity gain (DG) is determined by the following factors:
- type and configuration of antennas;
- frequency;
- propagation scenario;
- diversity algorithm of the receiver.

7. Method according to one of the preceding claims 1 to 6, **characterised in that** the radio transmission system can be designed by means of an upper or lower limit value or by means of an average value of diversity gain (DG).

8. Method according to one of the preceding claims 1 to 7, **characterised in that**
- a constant power of a transmitter (1) exists at an antenna (2);
- quasi-stationary propagation conditions exist;
- a constant speed of a station in mobile telephone systems exists.

9. Method according to one of the preceding claims 1 to 8, **characterised in that** the measurement has the following steps:
- measurement of the input power of the receiver (4);
- measurement of the corresponding bit error rate with at least one receiver antenna (5, 6);
- attenuation of the signal by means of an attenuation adjuster (7);
- reduction of the input power to a bit error rate BER(3) ~ BER(1);
- linear interpolation or extrapolation of the measured values of input power of P_{RX}(1) and P_{RX}(2) and calculation of the input power to be expected P_{RX}* for calculation of the bit error rate;
- determination of the diversity gain (DG).

10. Method according to one of the preceding claims 1 to 9, **characterised in that** an attenuation adjuster (7) is used for reduction of the input power at the receiver system (4).

11. Method according to one of the preceding claims 1 to 10, **characterised in that** it is carried out on a computer (9) which automatically performs, detects and interpolates the measurements and carries out calculation of the diversity gain (DG).

## Revendications

1. Procédé pour mesurer le gain de diversité d'antennes de systèmes numériques grâce à la mesure de l'amélioration de la sensibilité de système de réception par l'intermédiaire du taux d'erreurs sur les bits (BER), **caractérisé en ce que** le procédé comporte les étapes qui consistent :
- à mesurer la puissance d'entrée P_{RX}(1) du système de réception (4) et le taux d'erreurs BER(1) correspondant pour le scénario de propagation associé pourvu d'une antenne (3) ;
- à mesurer le taux d'erreurs BER(2) au niveau du système de réception (4) pour une puissance d'entrée de système égale P_{RX}(2)=P_{RX}(1) avec plusieurs antennes (5, 6) ;
- à réduire la puissance d'entrée au niveau du système de réception (4) à une puissance d'entrée P_{RX}(3) à laquelle le taux d'erreurs sur les bits BER(3) associé est à peu près égal au taux d'erreurs BER(1) selon l'étape 1 du procédé ;
- à définir une puissance d'entrée à prévoir P_{RX}* pour le taux d'erreurs BER(3) à partir des puissances d'entrée P_{RX}(1), P_{RX}(2) déterminés et des taux d'erreurs BER(1), BER(2) et BER(3) par interpolation/extrapolation,
- à définir le gain de diversité DG à partir de la différence entre les puissances d'entrée P_{RX}(1) et P_{RX}*.

2. Procédé selon la revendication 1, **caractérisé en ce qu'**il est conçu pour des mesures en mode réciproque de diversité d'antennes d'émission.

3. Procédé selon l'une des revendications 1 à 2, **caractérisé en ce que** les mesures nécessaires pour définir la valeur de gain de diversité (DG) sont aptes à être effectuées à l'aide de stations de base en service ou au laboratoire, étant précisé que les valeurs DG mesurées au laboratoire sont mesurées avec la simulation de différentes voies de propagation à l'aide d'un simulateur de canal radio (8).

4. Procédé selon l'une des revendications 1 à 3 précédentes, **caractérisé en ce que** la valeur de gain de diversité (DG) est apte à être définie à partir d'un taux d'erreurs sur les bits et d'une puissance d'entrée de récepteur mesurables avec précision.

5. Procédé selon l'une des revendications 1 à 4 précédentes, **caractérisé en ce que** le procédé de mesure est mis en oeuvre sur une structure de mesure avec au moins une antenne d'émission et au moins deux antennes de réception (5, 6).

6. Procédé selon l'une des revendications 1 à 5 précédentes, **caractérisé en ce que** le gain de diversité (DG) est défini par les facteurs suivants :
- type et configuration des antennes ;
- fréquence ;
- scénario de propagation ;
- algorithme de diversité du récepteur.

7. Procédé selon l'une des revendications 1 à 6 précédentes, **caractérisé en ce que** le système de transmission radio est apte à être planifié à l'aide d'une valeur limite supérieure ou inférieure ou à l'aide d'une valeur moyenne du gain de diversité.

8. Procédé selon l'une des revendications 1 à 7, **caractérisé**
- **en ce qu'**une puissance constante d'un émetteur (1) est appliquée à une antenne (2) ;
- **en ce qu'**il y a des conditions de propagation quasi stationnaires ;
- **en ce qu'**il y a une vitesse constante d'une station dans des systèmes de téléphonie mobile.

9. Procédé selon l'une des revendications 1 à 8 précédentes, **caractérisé en ce que** la mesure comporte les étapes qui consistent :
- à mesurer la puissance d'entrée du récepteur (4) ;
- à mesurer le taux d'erreurs sur les bits correspondant, avec au moins une antenne de réception (5, 6) ;
- à atténuer le signal à l'aide d'un ajusteur d'atténuation (7)
- a réduire la puissance d'entrée jusqu'à un taux d'erreurs sur les bits BER(3) ≈BER(1)
- à réaliser une interpolation ou une extrapolation linéaire des valeurs de mesure de la puissance d'entrée de P_{RX}(1) et P_{RX}(2) et à calculer la puissance d'entrée à prévoir P_{RX}* en vue du calcul du taux d'erreurs sur les bits ;
- à définir le gain de diversité (DG).

10. Procédé selon l'une des revendications 1 à 9 précédentes, **caractérisé en ce que** pour réduire la puissance d'entrée au niveau du système de réception (4) un ajusteur d'atténuation (7) est utilisé.

11. Procédé selon l'une des revendications 1 à 10 précédentes, **caractérisé en ce qu'**il est mis en oeuvre sur un ordinateur (9) qui procède automatiquement à l'exécution et à l'enregistrement des mesures et à l'interpolation et qui exécute le calcul du gain de diversité (DG).
